Europäisches Patentamt

European Patent Office

Office européen des brevets

(11) Veröffentlichungsnummer: **0 261 499 B1**

# (12) EUROPÄISCHE PATENTSCHRIFT

(45) Veröffentlichungstag der Patentschrift: **05.01.94**

(21) Anmeldenummer: **87113147.0**

(22) Anmeldetag: **09.09.87**

(51) Int. Cl.5: **C08L 25/02**, C08L 33/18

(54) **Plastisole auf Basis von Styrol/Acrylnitril-Mischpolymerisaten.**

(30) Priorität: **22.09.86 CH 3806/86**
**17.10.86 CH 4159/86**

(43) Veröffentlichungstag der Anmeldung:
**30.03.88 Patentblatt 88/13**

(45) Bekanntmachung des Hinweises auf die
Patenterteilung:
**05.01.94 Patentblatt 94/01**

(84) Benannte Vertragsstaaten:
**AT BE CH DE ES FR GB GR IT LI LU NL SE**

(56) Entgegenhaltungen:
**US-A- 2 580 997**
**US-A- 4 064 092**
**US-A- 4 071 653**
**US-A- 4 210 567**
**US-A- 4 252 852**

(73) Patentinhaber: **BAYER AG**

**D-51368 Leverkusen(DE)**

(72) Erfinder: **Saur, Wolfgang, Dr.**
**Tafletenstrasse 5**
**CH-8863 Buttikon(CH)**
Erfinder: **Schreiber, Herbert**
**Seeblick 3**
**CH-8832 Wollerau(CH)**
Erfinder: **Hilken, Günter, Dr.**
**Odenthaler Strasse 301**
**D-5000 Köln 80(DE)**
Erfinder: **Peter, Rolf, Dr.**
**Gneisenaustrasse 15a**
**D-4047 Dormagen(DE)**

(74) Vertreter: **Gremm, Joachim, Dr.**
**Bayer AG**
**Konzernverwaltung RP**
**Patente Konzern**
**D-51368 Leverkusen (DE)**

**Beschreibung**

Die Erfindung betrifft lagerstabile Dispersionen aus feinteiligen Kunstharzen in Weichmachern, im folgenden Plastisole genannt, ihre Herstellung und Verwendung.

Als Plastisole werden flüssige bis pastenförmige Gemische bezeichnet, die ein in einem flüssigen Weichmacher dispergiertes partikelförmiges Polymerisat enthalten.

Wesentliches Merkmal der Plastisole ist, daß sich bei üblichen raumtemperaturnahen Lagerbedingungen das Kunstharz nicht in dem flüssigen Weichmacher löst und somit die Phasentrennung soweit erhalten bleibt, daß das Produkt fließfähig ist.

Weiteres wesentliches Merkmal der Plastisole ist, daß beim Erwärmen auf üblicherweise 160 bis 200°C eine Lösung des Kunstharzes in dem Weichmacher entsteht, die auf Grund der hohen Polymerkonzentration Festkörpereigenschaften hat. Beim Abkühlen auf Raumtemperatur behält die gelierte Lösung ihre homogene Beschaffenheit, die je nach Weichmachergehalt von sprödhart bis weichzähig-klebrig reichen kann, dauernd bei.

Diese irreversible Zustandsänderung wird in der Fachsprache als Gelierung oder Gelatinierung bezeichnet.

Als Weichmacher kann jede Flüssigkeit angesehen werden, die als Partner eines Kunststoffs bzw. Kunstharzes die Bedingungen für ein Plastisol erfüllt; wichtig ist eine sehr geringe Flüchtigkeit, da sonst bei Lagerung der ausgelierten Plastisole der Weichmacher allmählich entweichen könnte und unerwünschte Eigenschaftsveränderungen aufträten.

Technisch wichtige Weichmacher sind z.B. die Ester der Phthal-, Adipin-, Sebacin-, Azelain-, Citronen- und Phosphorsäure, chlorierte Kohlenwasserstoffe, flüssige Polyester und epoxidierte natürliche Öle wie Lein- oder Sojaöl.

Ausführliche Definitionen des Begriffs Weichmacher und der chemisch-physikalischen Wechselwirkung zwischen Weichmacher und Kunststoff- bzw. Kunstharzteilchen gibt K. Weinmann in "Beschichten mit Lacken und Kunststoffen", Verlag W.A. Colomb, Stuttgart 1967, Seite 47 bis 158.

Zur Verträglichkeit einer großen Zahl technisch gebräuchlicher Weichmacher mit verschiedenen Polymerisattypen siehe F. Stühlen und L. Meier in der "Kunststoff-Rundschau", 19, S. 251 bis 260 und 316 bis 319 (1972).

Theoretisch kann durch geeignete Wahl der Bestandteile jedes polymere Harz in ein Plastisol überführt werden. In der Praxis hat sich sowohl die technische Anwendung als auch die technische Literatur fast ausschließlich auf die Verwendung von Polyvinylchlorid (PVC) zur Bildung von Plastisolen konzentriert.

Diese beherrschende Stellung von PVC auf dem technischen Plastisolgebiet rührt daher, daß für zahlreiche Polymerisate mit sonst äußerst vorteilhaften und erwünschten Eigenschaften keine geeigneten Weichmacher gefunden werden können, weil Dispersion mit ungeeigneter Viskosität und Lagerstabilität erhalten werden, die Weichmacher aus den gelierten Plastisolen wieder ausschwitzen oder die Gelate ungenügende mechanische Eigenschaften aufweisen.

Obwohl sich PVC als polymere Komponente in Plastisolen in vieler Hinsicht gut bewährt hat, wird es zunehmend als Nachteil empfunden, daß dieses Polymere beim Erhitzen Chlorwasserstoff abspaltet, der bei Fertigungsverfahren, bei denen Hitze angewendet wird, zur Korrosion führen kann oder der im Falle eines Brandes oder bei der Abfallverbrennung in gefährlich hohen Konzentrationen auftreten kann. Diese Instabilität des PVC, die neben Salzsäureabspaltung zur Versprödung und Verfärbung führt, erfordert die Verwendung z. T. toxischer Stabilisatoren, wie z.B. Blei- und Cadmium-Verbindungen.

Besonders wünschenswert wäre es daher, harzartige Acryl- und Vinylesterpolymerisate und -copolymerisate für Plastisole einzusetzen, zeigen sie doch gegenüber PVC diese Nachteile nicht.

Plastisole von Acrylesterpolymeren ("Acrylatplastisole") sind bereits vorgeschlagen worden. In den DE-PS 2 454 235 und 2 529 732 wird der Einsatz von Acrylpolymerisaten mit einer Tg > 35°C mit einer Abstimmung von Tg, Teilchendurchmesser und Zusammensetzung des dispergierten Polymerteilchens und speziellen Weichmachermischungen beschrieben. Diese Acrylatplastisole sind aber noch nicht befriedigend.

In der US-PS 4 071 653 sowie in den DE-PS 2 543 542, 2 722 752 und 2 949 954 werden speziell aufgebaute Methacrylatteilchen beschrieben, die dadurch, daß sie aus einem besonders gut weichmacherverträglichen Kern und einer schlecht weichmacherverträglichen Schale aufgebaut sind, gute Lagerstabilität des flüssigen Plastisols zeigen. Den US-PS 4 176 028, GB-PS 1 598 579, DE-PS 2 812 014, 2 812 015 und 2 812 016 ist die Verwendung von Acryl- oder Methacrylpolymerisaten zu entnehmen.

Kennzeichen all dieser Versuche, Acrylpolymerisate zu Plastisolen zu verarbeiten, ist, daß sie auf eine sehr spezielle Auswahl der Rohstoffe angewiesen sind, wodurch die Einsatzfähigkeit der Plastisole eingeschränkt wird. Darüber hinaus werden bezüglich Lagerstabilität die hervorragenden Produkteigenschaften der PVC-Plastisole nicht erreicht.

2

In der DE-OS 3 308 925 wird weiterhin vorgeschlagen, innerhalb der oben aufgezeigten Rahmenbedingungen für Plastisole, Kunstharze, wie Vinylestercopolymerisate, (Meth)Acrylestercopolymerisate und Weichmacher in freier Auswahl zu Plastisolen zu kombinieren, und zwar dadurch, daß die Dispersionen mit Schutzkolloiden bei üblichen raumtemperaturnahen Lagerbedingungen stabilisiert werden, mit der Maßgabe, daß die Stabilisierung bei der Gelierung bei erhöhter Temperatur aufgehoben wird und die als Stabilisator dienenden Schutzkolloide in das resultierende Plastigel integriert werden.

Diese Methode weist die gleichen Nachteile wie die vorher beschriebenen auf. Durch die Art der Schutzkolloide ist darüber hinaus eine wesentliche anwendungstechnische Einschränkung gegeben.

Es besteht daher ein Bedarf an neuartigen Plastisolen, welche die hervorragenden Verarbeitungs- und Produkteigenschaften von PVC-Plastisolen aufweisen, jedoch bereits bei niedrigeren Temperaturen gelieren und darüber hinaus chlorfrei sind, also weder Chlor noch Chlorwasserstoff abspalten können, die universell einsetzbar sind und den Verzicht auf an sich unnötige Hilfsmittel wie Schutzkolloide, weichmacherunverträgliche Schalen und ähnliches ermöglichen.

Es wurde überraschend gefunden, daß man solche Plastisole auf Basis spezieller Styrol/Acrylnitril-Copolymerisate, die durch ihre Monomerzusammensetzung charakterisiert sind, erhält.

Gegenstand der Erfindung sind daher Plastisole aus 80 bis 5 Gew.-% Weichmacher und 20 bis 90 Gew.-% teilchenförmiges Polymer enthaltend

a) 5 bis 60 Gew.-%, bevorzugt 10 bis 45 Gew.-%, Acrylnitril und/oder Methacrylnitril,

b) mindestens 15 Gew.-%, bevorzugt 30 bis 75 Gew.-%, Styrol und/oder $\alpha$-Methylstyrol,

c) 0 bis 10 Gew.-%, bevorzugt 0,5 bis 6 Gew.-%, mit den Monomeren a) und/oder b) copolymerisierbarer Carbonsäure,

d) 0 bis 30 Gew.-%, vorzugsweise 10 bis 30 Gew.-% und insbesondere bei Abwesenheit der Komponente c), 10 bis 30 Gew.-% Acrylsäure- und/oder Methacrylsäurealkylester, bevorzugt mit $C_2$-$C_{12}$-Alkoholen, gegebenenfalls ein Verdünnungsmittel und weitere übliche Bestandteile, wobei sich die Gewichtsprozente an Weichmachern und Polymer auf die Summe aus Weichmacher und Polymer beziehen.

Plastisole im Sinne dieser Erfindung können auch neben dem Weichmacher bis zu 20 % eines inerten, die Gelierung nicht fördernden Lösungsmittels enthalten.

Carbonsäuren c) im Sinne der Erfindung sind beispielsweise Acrylsäure, Methacrylsäure, Maleinsäure, Itaconsäure, Fumarsäure oder Mischungen daraus.

Für die erfindungsgemäßen Plastisole sind vorzugsweise emulsionspolymerisierte Copolymere geeignet. Es hat sich erwiesen, daß die Durchführung der Polymerisation einen deutlichen Einfluß auf die Eigenschaften, insbesondere die Pastenstabilität der erfindungsgemäßen Plastisole ausübt. Besonders vorteilhaft sind die durch Emulsionspolymerisation erzeugten Copolymerisate dann, wenn sie durch Emulsionspolymerisation in der Weise hergestellt worden sind, daß nach dem sogenannten "Saat-Zulauf-Verfahren" (Keimlatexverfahren) in bekannter Weise (Houben-Weyl, Band XIV/1 (1961), S. 339 ff) der mittlere Teilchendurchmesser gezielt auf 0,2 bis 1,5 $\mu$m (Bestimmungsmethode: Ultrazentrifuge) eingestellt wird.

Nach diesem Verfahren legt man eine bestimmte Menge eines Latex als Keime vor und führt dann ausgehend von diesen Keimen die Herstellung der Dispersion durch Polymerisation eines Monomeren bzw. einer Monomermischung durch.

Nach einer aus Houben-Weyl, Band XIV/1 (1961) auf Seite 340 bekannten Korrelation ist dann - unter der Voraussetzung, daß während der Polymerisation keine neuen Latexteilchen als Keime entstehen und die Dichte des Polymerisats während der Polymerisation konstant bleibt - der mittlere Durchmesser der so gewonnenen Latexteilchen abhängig von dem mittleren Durchmesser der Teilchen im Keimlatex und der Kubikwurzel des Quotienten aus der Menge des Polymerisats nach der Polymerisation und der Menge des Polymerisats im Keimlatex.

Falls man nach diesem Verfahren den mittleren Durchmesser der Latexteilchen wesentlich vergrößern will, muß man daher die Menge des Polymerisats im Keimlatex möglichst klein halten. Üblicherweise setzt man bei der Herstellung der erfindungsgemäßen Polymerisate den Keimlatex in der Menge ein, daß 1 bis 30 %, vorzugsweise 1,5 bis 15 % der erhaltenen Polymerisatmenge in Form des Keimlatex vorgelegt wurden. Die Polymerisation verläuft unter diesen Umständen z. T. sehr langsam und es ist notwendig, die Nachdosierung des Emulgators exakt anzupassen, so daß einerseits keine neuen Teilchen entstehen und andererseits keine Koagulation eintritt.

Bei der Herstellung des Keimlatex, die separat erfolgen kann, kann nach bekannten Prinzipien der Emulsionspolymerisation verfahren werden, indem z.B. durch Variation von Art und Menge des verwendeten Emulgators bzw. Emulgatorgemisches und des Initiators die Latexpartikelgrößen justiert werden.

Prinzipiell ist die Verwendung der nach dem beschriebenen Saat-Zulauf-Verfahren erhältlichen Latices als Keimlatex möglich.

Zur Überführung der erhaltenen, meist 30 bis 60 %igen Dispersionen in ein trockenes Pulver werden die Dispersionen in an sich bekannter Weise durch Eintrocknung dünner Schichten in flachen Behältern oder auf Walzen oder durch Sprühtrocknung getrocknet.

Durch Sprühtrocknung gewonnene Teilchen haben sich als besonders vorteilhaft erwiesen, insbesondere wenn bei der Sprühtrocknung Temperaturen vermieden worden sind, bei denen die Primärteilchen des Emulsionspolymerisats in den Teilchenaggregaten zu einem harten Körper zusammensintern. Die dadurch erzeugten Sekundärpartikel weisen mittlere Teilchendurchmesser von 1 bis 100 $\mu$m, vorzugsweise 5 bis 50 $\mu$m auf (Bestimmungsmethode: Laserbeugung).

Die zur Herstellung der erfindungsgemäßen Plastisole verwendeten Polymere weisen vorzugsweise einen Gelgehalt von 1-90 %, gemessen in Tetrahydrofuran (20 °C), auf.

Nicht alle Weichmacher sind gleich gut für die erfindungsgemäßen Plastisole geeignet, da viele mögliche Kombinationen entweder unverträglich sind oder eine ungenügende Lagerstabilität aufweisen. Mit zunehmendem Gehalt an (Meth)Acrylnitril im Polymeren ist ein stärker polarer Weichmacher erforderlich.

Erfindungsgemäß werden Weichmacher verwendet, für die sich die Beziehung zwischen dem (Meth)-Acrylnitrilgehalt des Polymeren (Gew.-%) (M)AN und den Weichmachereigenschaften (Dichte d und Anzahl der aliphatischen C-Atome $C_{ali}$) folgendermaßen darstellen läßt:

$$(I) \qquad \text{Gew.-\% (M)AN} \leq 200 \cdot d - \frac{36}{1 + C_{ali}} - 168$$

$$(II) \qquad \text{Gew.-\% (M)AN} \geq 183 \cdot d - \frac{45}{1 + C_{ali}} - 166$$

Um eine genügende Verträglichkeit zu erhalten, muß der (Meth)Acrylnitrilgehalt vorzugsweise der Beziehung (I) genügen. Eine hinreichende Lagerstabilität wird im allgemeinen erreicht, wenn der (Meth)-Acrylnitrilgehalt die Beziehung (II) erfüllt.

Eine Ausnahme von dieser zweiten Regel bilden Weichmacher mit cycloaliphatischen Gruppen, so z.B. Dicyclohexylphthalat, welche auch mit wesentlich (meth)acrylnitrilärmeren Polymeren stabile Plastisole bilden.

Auch Weichmachergemische lassen sich prinzipiell so einordnen. So besteht zum Beispiel der Weichmacher C9 der Tabelle 1 aus einem Gemisch von Dibenzyl-, Dibutyl- und Benzylbutylphthalat. Allerdings sind bei solchen Gemischen die brauchbaren Mengenverhältnisse etwa enger als die berechneten.

Neben den erfindungsgemäßen Bestandteilen der Plastisole können gegebenenfalls Hilfsstoffe zugesetzt sein, z.B. Viskositätsregler, Sedimentationsverhüter, Verlaufsverbesserer, Riechstoffe, Netzmittel, Streckmittel, Haftvermittler, Alterungs-, Oxidations-und UV-Schutzmittel, Blähmittel für Schäume und andere in der Beschichtungs- und Plastisoltechnologie übliche Hilfsstoffe. Auch der Zusatz von Pigmenten und Füllstoffen organischer und/oder anorganischer Natur, sowie löslicher Farbstoffe ist gegebenenfalls möglich.

Die erfindungsgemäßen Plastisole können sehr vielseitige Verwendung als Beschichtungs- und Abdichtmassen und Klebstoffe finden. Typische Verwendungsbeispiele sind die Beschichtungen von textilen Geweben für Planen und Bekleidungsstoffe, wobei die im Vergleich zu PVC bessere Lichtbeständigkeit der Polymerisat besonders vorteilhaft ist, Dichtungen für Kronkorken, Antidröhnmassen, Nahtabdichtungs- und Verklebungsmittel im Automobilbau mit besonders niedrigen Einbrenntemperaturen, Herstellung von Formkörpern, insbesondere Spielzeug im Rotations- oder Heißtauchverfahren, Kunstlederherstellung.

Die Verarbeitung der erfindungsgemäß hergestellten Plastisole erfolgt nach der üblichen Plastisol-Technologie (siehe z.B. H.A. Sarretnick, "Plastisols and Organosols", Van Nostrand Reinhold Company, New York 1972).

Beispiele

Beispiel 1 (Allgemeine Vorschrift)

Herstellung der Polymerisatpulver

a) Saatlatex

In einem Wittschen Topf mit Rückflußkühler, Rührwerk (150 rpm) und 2 Zulaufgefäßen werden bei 80°C 0,28 g Kaliumperoxodisulfat und 0,70 g des Natrium-Salzes eines $C_{12}$-Paraffinsulfonats (Mersolat K 30, Bayer AG) in 1960 g dest. Wasser gelöst. In diese Lösung gibt man sofort 140 g Monomermischung und läßt unter Rühren 1 Stunde bei 80°C polymerisieren. Anschließend werden unter Rühren bei 80°C im Verlauf von 3 Stunden gleichmäßig zudosiert:

Zulauf 1:    1260 g Monomermischung
Zulauf 2:    Lösung aus:
          126 g dest. Wasser
          1,3 g Natriumhydrogencarbonat
          2,8 g Kaliumperoxodisulfat
          6,3 g Mersolat K 30

Nach Zulaufende beläßt man noch 1 Stunde bei 80°C. Nach Abkühlen auf Zimmertemperatur wird der Ansatz über ein feinmaschiges Siebgewebe filtriert. Die Dispersion hat einen Feststoffgehalt von ca. 40 %.

b) Saat-Zulauf-Verfahren

In einem Wittschen Topf mit Rückflußkühler, Rührwerk (150 rpm) und 2 Zulaufgefäßen werden bei 80°C 1850 g dest. Wasser und 130 g Saatlatex nach a) (40 %ig) vorgelegt.
Hierzu gibt man unter Rühren 42 g Monomermischung. Nach 10 Minuten gibt man hierzu eine Lösung von 0,5 g Kaliumperoxodisulfat in 10 ml dest. Wasser und dosiert unmittelbar danach im Verlauf von 7 Stunden

Zulauf 1:    1360 g Monomermischung
Zulauf 2:    Lösung aus:
          126 g dest. Wasser
          1,3 g Natriumhydrogencarbonat
          1,2 g Kaliumperoxodisulfat
          6,3 g Mersolat K 30

unter Rühren bei 80°C hinzu.
Nach Zulaufende beläßt man noch 1 Stunde bei 80°C. Nach Abkühlen auf Zimmertemperatur wird der Ansatz über ein feinmaschiges Siebgewebe filtriert. Die Dispersion hat einen Feststoffgehalt von ca. 40 %.

c) Trocknung der Polymerisat-Dispersion

Die Dispersion nach b) wird in eine Sprühtrocknungsanlage, die mit einer Zweistoffdüse ausgerüstet ist im Gleichstrom mit Luft von ca. 160°C eingeleitet. Das Mengenverhältnis Dispersion/Luft ist so eingestellt, daß das Sprühgut die Anlage bei einer Luftaustrittstemperatur von ca. 60°C in Form eines trockenen, feinteiligen, weißen bis durchscheinenden, keine glasigen Bestandteile enthaltenden Pulvers verläßt.
Nach dieser Vorschrift werden die Polymerisatpulver gemäß Tabelle 2 und 3 hergestellt. Die Monomerenmischungen entsprechen der dort angegebenen Polymerisatzusammensetzung. Sie sind für die Herstellung des Saatlatex und für das Saat-Zulauf-Verfahren jeweils geeignet.

Beispiele 2 bis 54

Durch Einmischen der gemäß Beispiel 1 hergestellten Polymerisatpulver in die in Tabelle 1 genannten Weichmacher wurden Plastisole hergestellt.
Das Mischungsverhältnis betrug 1 g Polymer : 1 g Weichmacher bzw. 4 g Polymer : 6 g Weichmacher. Die Eigenschaften der Plastisole und die der Gele nach 10 Min. Gelieren bei 160°C sind in Tabelle 2 angegeben.
Die Beispiele 2 und 3 sind Vergleichsbeispiele mit Polymeren ohne (Meth)Acrylnitril. Diese ergaben ein bei langsamer Verformung fließendes Gel ohne mechanische Festigkeit.

5

Beispiele 55 bis 59

Tabelle 3 zeigt das Verhalten von Gelproben im Zugversuch bei Raumtemperatur. Zusammensetzung der Gele: 100 Gew.-Teile Polymer : 100 Gew.-Teile "Santicizer 148" (Tabelle 1). Gelierbedingungen: 20 Min. bei 190°C.

Zusammensetzung der Polymeren: Acrylnitril 40 Gew.-%, Acrylsäure 3 Gew.-%, Styrol und flexibilisierendes Monomer zusammen 57 Gew.-%.

Beispiel 60

Zur Herstellung eines Metallklebers wurde die Mischung aus

| 22 Gew.-Tle. | "Santicizer 148" (P2) (Tabelle 1) |
| 15 Gew.-Tle. | Resorcin-Formaldehyd-Harz (Penacolite® Resin B-1A, Koppers Comp. USA) |
| 40 Gew.-Tle. | Polymer wie in Beispiel 55 |
| 1 Gew.-Tl. | pyrogene Kieselsäure (HDK N 20 E, Wacker GmbH, BRD) |

über einen Walzenstuhl abgerieben.

Zugscherproben auf glattem, geöltem Eisenblech ergaben nach einer Härtung von 20 Min. bei 210°C Festigkeiten von 10 N/mm$^2$ bei RT und 7 N/mm$^2$ bei -40°C.

Beispiel 61

Zur Herstellung eines füllstoffhaltigen Plastisols wurde die Mischung aus

| 20 Gew.-Tle. | "Witamol 112 (C5)" (Tabelle 1) |
| 20 Gew.-Tle. | Lackbenzin (Siedebereich 155-181°C) |
| 10 Gew.-Tle. | Kreide |
| 0,05 Gew.-Tle. | Ruß (zum Einfärben) |
| 2,5 Gew.-Tle. | Titanweiß |
| 50 Gew.-Tle. | Polymer gemäß Beispiel 4 |

abgerieben.

Als Haftvermittler wurden 12 Gew.-Tle einer 66 Gew.-%igen Lösung eines Polyurethan-Prepolymers mit einem Rest-NCO-Gehalt von 14 % (Liquid Prepolymer; Urethane International Int.) zugesetzt.

Eine Beschichtung auf lackiertem Eisenblech zeigt nach 30 Min. Härtung bei 180°C eine Schälfestigkeit von 38 bis 63 N/cm. Dieses Organosol eignet sich für Beschichtungen, so z.B. als Unterbodenschutz für Fahrzeuge.

Tabelle 1: Weichmacher

| Kurz-zeichen | Handelsname | Chemischer Name | chemische Zusammensetzung | | | | | Dichte g/cm³ | Molgew. |
| --- | --- | --- | --- | --- | --- | --- | --- | --- | --- |
| | | | C-aliphatisch | C-aromatisch | COO | $PO_4$ | Cl/O/S | | |
| C1 | Lipinol | Octyl-Fettsäure-ester | ¬23 | – | 1 | – | – | 0,8515 | 368 |
| C2 | Reamol DIDA | Di-iso-decyl-adipat | 24 | – | 2 | – | – | 0,912 | 426 |
| C3 | Witamol 500 | Di-octyl-Sebacat | 22 | – | 2 | – | – | 0,913 | 398 |
| C4 | Citroflex A-4 | Acetyl-tributyl-citrat | 16 | – | 4 | – | – | 1,048 | 402 |
| C5 | Witamol 112 | Di-n-$C_{10}$-$C_{12}$-alkylphthalat (geradkettig) | 22 | 6 | 2 | – | – | 0,96 | 474 |
| C6 | Adimoll BO | Benzyl-octyl-adipat | 13 | 6 | 2 | – | – | 1,00 | 348 |
| C7 | Edenol 344 | Di-methylcyclohexyl-phthalat | 14 | 6 | 2 | – | – | 1,075 | 358 |
| C8 | Santicizer 261 | Benzyl-octyl-phthalat | 9 | 12 | 2 | – | – | 1,07 | 368 |
| C9 | Unimol BB | Benzyl-butyl-phthalat | 5 | 12 | 2 | – | – | 1,12 | 312 |
| P1 | Disflamol TOF | Tri-octyl-phosphat | 24 | – | – | 1 | – | 0,92 | 434 |
| P2 | Santicizer 148 | Iso-decyl-diphenyl-phosphat | 10 | 12 | – | 1 | – | 1,06 | 390 |
| P3 | Disflamol DPO | Di-phenyl-octyl-phosphat | 8 | 12 | – | 1 | – | 1,09 | 362 |
| P3' | Santicizer 141 | Di-phenyl-octyl-phosphat | 8 | 12 | – | 1 | – | 1,09 | 362 |
| P4 | Disflamol TKP | Tri-kresyl-phosphat | 3 | 18 | – | 1 | – | 1,18 | 368 |
| P5 | Disflamol DPK | Di-phenyl-kresyl-phosphat | 1 | 18 | – | 1 | – | 1,20 | 340 |
| P6 | Disflamol TCA | Tri-chlor-ethyl-phosphat | 6 | – | – | 1 | 3 x Cl | 1,42 | 285,5 |
| S1 | Lipinol T | Di-benzyl-toluol | 3 | 18 | – | – | – | 1,035 | 272 |
| S2 | Plastilit DS 3060 | Polypropylenglykol-alkyl-phenyl-ether | nicht bekannt | | | | | | |
| S3 | Desavin | Di(phenoxy-ethyl)-formal | 5 | 12 | – | – | 4 x 0 | 1,13 | 288 |
| S4 | Mesamol | Phenol-alkylsulfonsäureester | 15 | 6 | | | $SO_3$ | 1,05 | 368 |

EP 0 261 499 B1

TABELLE 2

| Beisp. Nr. | Polymer-Zusammensetzung 1) | | | | Weichmacher gemäss Tab. 1 | Verhältnis Polymer:Weichm. | Plastisol-Eigenschaft (Tage bei RT nach dem Mischen) | | | | | | | | Gel-Eigenschaften nach 20' 160°C 2) | Shore-Härte A nach 3" 2) |
|---|---|---|---|---|---|---|---|---|---|---|---|---|---|---|---|---|
| | ST | AN | AS | BA | | | Zustand nach 1d | flüssig | viscos | pastös | teigig | pulverig knetbar | geliert knetbar | geliert | | |
| 2 | 82 | 0 | 3 | 15 | C7 | 1:1 | viscos | | 2 | | 3-37 | | | 40 | fließt | 33 |
| 3 | | | | | " | 4:6 | " | | 8 | | 9-15 | | | 16 | fließt | 16 |
| 4 | 72 | 10 | 3 | 15 | C5 | 1:1 | pastös | | | 15 | 16-27 | | | 28 | g | 8 |
| 5 | | | | | " | 4:6 | flüssig | 12 | | 13-14 | 15-24 | | | 25 | gt | 3 |
| 6 | | | | | C7 | 1:1 | viscos | | 2 | | 3-37 | | | 38 | gh | 56 |
| 7 | | | | | " | 4:6 | " | | 24 | | 25-26 | | 28 | <28 | gh | 30 |
| 8 | 62 | 20 | 3 | 15 | S1 | 4:6 | pastös | 1 | | 2 | | 3-22 | | 23 | g | 6 |
| 9 | | | | | C7 | 1:1 | viscos | | >30 | | | | | >30 | gh | 76 |
| 10 | | | | | " | 4:6 | " | | >30 | | | | | >30 | gh | 59 |
| 11 | 52 | 30 | 3 | 15 | B4 | 4:6 | flüssig | 30 | | | | | | >30 | yt(s) | 36 |
| 12 | | | | | C4 | 1:1 | " | 4 | 5-20 | | | | | >20 | gt | 20 |
| 13 | | | | | C7 | 1:1 | viscos | | 50 | | | | | >50 | gh | 96 |
| 14 | | | | | " | 4:6 | " | | 30 | | | | | >30 | gh | 85 |
| 15 | | | | | C8 | 1:1 | flüssig | 6 | | | | | | 7 | gh | 29 |
| 16 | | | | | " | 4:6 | " | 2 | | 3-12 | 13-18 | | | 19 | g | 6 |
| 17 | 47 | 35 | 3 | 15 | C4 | 1:1 | " | 7 | | | | | | 8 | vw | 79 |
| 18 | | | | | C7 | 1:1 | " | 7 | 8-57 | | | | | >57 | vw | 95 |
| 19 | | | | | C8 | 1:1 | " | 24 | | | | | | >24 | g | 64 |
| 20 | 42 | 40 | 3 | 15 | C8 | 1:1 | flüssig | 14 | 15-17 | | | | | >21 | w | 76 |
| 21 | | | | | S3 | 1:1 | " | | | 4 | 5-18 | | | 19 | gt | 24 |
| 22 | | | | | P2 | 1:1 | " | | >30 | | | | | >30 | P | 31 |
| 23 | | | | | " | 4:6 | " | 24 | | 25->29 | | | | >29 | g | 11 |
| 24 | | | | | P3 | 1:1 | " | | | | 14 | | | 15 | g | 25 |
| 25 | | | | | " | 4:6 | pastös | 1 | | 2-10 | 11-15 | | | 16 | g | 7 |
| 26 | | | | | P4 | 1:1 | flüssig | 6 | 7->26 | | | | | >26 | g | 29 |
| 27 | | | | | " | 4:6 | " | 22 | 23-24 | 25->32 | | | | >32 | g | 7 |
| 28 | | | | | C9 | 1:1 | viscos | | 1 | 2-24 | | | | 25 | g | 21 |
| 29 | | | | | " | 4:6 | flüssig | >30 | | | | | | >30 | g | 8 |
| 30 | | | | | P5 | 1:1 | " | | | | 8 | | | 9 | g | 23 |
| 31 | 39 | 43 | 3 | 15 | S3 | 1:1 | flüssig | 6 | .7->26 | | | | | >26 | w(s) | 54 |
| 32 | | | | | P2 | 1:1 | " | 3 | 4->20 | | | | | >20 | w | 65 |
| 33 | | | | | P3 | 1:1 | " | 5 | 6->27 | | | | | >27 | w | 38 |
| 34 | | | | | P4 | 1:1 | " | 7 | 8->29 | | | | | >29 | g | 60 |
| 35 | | | | | C9 | 1:1 | " | 6 | 7->26 | | | | | >26 | g | 38 |
| 36 | | | | | P5 | 1:1 | " | 3 | 4->19 | | | | | >19 | g | 44 |

EP 0 261 499 B1

TABELLE 2 (Fortsetzung)

| Beisp. Nr. | ST | AN | AS | BA | Weichmacher gemäß Tab. 1 | Verhältnis Polymer Weichm. | Zustand nach 1d | flüssig | viskos | teigig | fest | flüssig knödlar | viskos knödlar | fest | Gel-Eigenschaften nach 20' 160°C 2) | Shore-Härte A nach 3" |
|---|---|---|---|---|---|---|---|---|---|---|---|---|---|---|---|---|
| 37 | 36 | 46 | 3 | 15 | P3 | 1:1 | . | 3 | | | | | | >19 | w | 56 |
| 38 | | | | | P4 | 1:1 | . | 20 | | | | | | >20 | 9 | 77 |
| 39 | | | | | C9 | 1:1 | . | >29 | | | | | | >29 | 9 | 69 |
| 40 | | | | | P5 | 1:1 | . | 2 | | | | | | >23 | 9 | 68 |
| 41 | 32 | 50 | 3 | 15 | P4 | 1:1 | . | >7 | 4->19 | | | | | >21 | w | 88 |
| 42 | | | | | C9 | 1:1 | . | >30 | | | | | | >30 | w | 74 |
| 43 | 43 | 42 | 0 | 15 | P5 | 1:1 | teigig | | 3->23 | >30 | | | | >30 | w | 72 |
| 44 | | | | | C8 | 1:1 | flüssig | 15 | | | 16->30 | 2-22 | | >30 | w(s) | 59 |
| 45 | | | | | S3 | 1:1 | pastös | | | | 1 | | | 23 | 9 | 27 |
| 46 | | | | | P2 | 1:1 | flüssig | | | 10-30 | 9 | 31->100 | | >100 | 9 | 51 |
| 47 | | | | | P3 | 1:1 | . | | | 10-25 | | 26->40 | | >40 | 9 | 40 |
| 48 | | | | | P3 | 4:6 | pastös | 9 | | | 9->30 | | | >30 | 9 | 16 |
| 49 | | | | | P4 | 1:1 | flüssig | 8 | | | 1 | | | >30 | 9 | 37 |
| 50 | | | | | C9 | 4:6 | pastös | 4 | | | 5->30 | | 2->30 | >30 | 9 | 17 |
| 51 | | | | | - | 1:1 | teigig | 1 | | | 19 | | | 21 | 9 | 26 |
| 52 | | | | | P5 | 4:6 | pastös | | | 2-12 | <1 | | | 13 | 9 | 10 |
| 53 | | | | | - | 1:1 | . | 1 | | 10-18 | 9 | | | 19 | 9 | 29 |
| 54 | | | | | " | 4:6 | | | | 9-10 | 2-8 | | | 10 | 8 | 11 |

Zeichenerklärung zu Tabelle 2

1)

ST = Styrol,

AN = Acrylnitril

AS = Acrylsäure

BA = Butylacrylat

9

3) Geleigenschaften:

g    =    gut gelierbar
gh   =    gut gelierbar, haftet auf Alu-Blech
gt   =    gut gelierbar, trüb
w    =    schwacher Weissbruch
ww   =    starker Weissbruch
(s)  =    schwitzt schwach aus
s    =    schwitzt stark aus
p    =    trübe Perlstruktur

Tabelle 3

| Bsp. Nr. | Flexibilisierendes Monomer | Geleigenschaften mit Santicizer 148 (1:1) 20' bei 190°C geliert Zugspannung [N/mm²] | | | Dehnung max. | Shore A max./30" |
|---|---|---|---|---|---|---|
| | | 100 % | 200 % | Bruch | | |
| 55 | 10 % Butylacrylat | 2,0 | 4,9 | 5,7 | 215 % | 77/44 |
| 56 | 15 % Butylacrylat | 1,2 | 3,2 | 6,0 | 255 % | 64/30 |
| 57 | 20 % Butylacrylat | 0,9 | 2,7 | 7,1 | 285 % | 60/22 |
| 58 | 15 % 2-Ethylhexylacrylat | 0,8 | 2,1 | 7,0 | 310 % | 59/24 |
| 59 | 20 % 2-Ethylhexylacrylat | 1,3 | 3,6 | 5,9 | 240 % | 64/33 |

**Patentansprüche**

1. Plastisole aus 80 bis 5 Gew.-% Weichmacher und 20 bis 95 Gew.-% teilchenförmiges Polymer, enthaltend

   a) 5 bis 60 Gew.-% Acrylnitril und/oder Methacrylnitril
   b) mindestens 15 Gew.-% Styrol und/oder α-Methylstyrol,
   c) 0 bis 10 Gew.-% mit den Monomeren a) und/oder b) copolymerisierbarer Carbonsäure
   d) 0 bis 30 Gew.-%, in Abwesenheit der Komponente c) 10 bis 30 Gew.-%, Acrylsäure- und/oder Methacrylsäurealkylester,

   gegebenenfalls einem Verdünnungsmittel und weiteren üblichen Bestandteilen, wobei sich die Gewichtsprozente an Weichmacher und Polymer auf die Summe aus Weichmacher und Polymer beziehen, dadurch gekennzeichnet, daß der (Meth)Acrylnitrilgehalt des Polymeren der Beziehung (I)

$$(I) \quad \text{Gew.-\% (M)AN} \leq 200 \cdot d - \frac{36}{1 + C_{ali}} - 168$$

   und der Beziehung (II)

$$(II) \quad \text{Gew.-\% (M)AN} \geq 183 \cdot d - \frac{45}{1 + C_{ali}} - 166$$

   entspricht, wobei (d) die Dichte des Weichmachers und ($C_{ali}$) die (mittlere) Anzahl aliphatischer Kohlenstoffatome im Molekül des Weichmachers bedeuten.

2. Plastisole gemäß Anspruch 1, dadurch gekennzeichnet, daß die Polymeren durch Emulsionspolymerisation hergestellt worden sind und im Latex mittlere Teilchendurchmesser von 0,2 bis 1,5 μm aufweisen.

3. Plastisole gemäß Anspruch 2, dadurch gekennzeichnet, daß die durch Emulsionspolymerisation erhaltenen Polymerlatices durch Sprühtrocknung getrocknet worden sind.

4. Plastisole gemäß Anspruch 3, dadurch gekennzeichnet, daß die Sekundärpartikelgröße zwischen 1 und 100 μm liegt.

5. Plastisole nach Ansprüchen 1 - 4, dadurch gekennzeichnet, daß die genannten Polymere 1 - 90 Gew.-% Gel enthalten (gemessen in Tetrahydrofuran bei 20°C).

6. Verfahren zur Herstellung von Plastisolen gemäß Anspruch 1 durch Emulsionspolymerisation der Monomeren, Abtrennen des Polymerisats von der wäßrigen Phase und Vermischen mit dem Weichmacher, gegebenenfalls Lösungsmittel und gegebenenfalls weiteren üblichen Bestandteilen, dadurch gekennzeichnet, daß man Polymerisate nach dem Saat-Zulauf-Verfahren herstellt.

7. Verwendung der Plastisole gemäß Ansprüchen 1 bis 5 als Beschichtungs- und Abdichtungsmassen und Klebstoffe.

**Claims**

1. Plastisols of 80 to 5% by weight plasticizer and 20 to 95% by weight particulate polymer, containing

   a) 5 to 60% by weight acrylonitrile and/or methacrylonitrile,
   b) at least 15% by weight styrene and/or α-methyl styrene,
   c) 0 to 10% by weight carboxylic acid copolymerizable with the monomers a) and/or b),

d) 0 to 30% by weight and - in the absence of component c) - 10 to 30% by weight alkyl acrylate and/or methacrylate,

optionally a diluent and other typical constituents, the percentages by weight of plasticizer and polymer being based on the sum of plasticizer and polymer, characterized in that the (meth)acrylonitrile content of the polymer corresponds to the following relation (I):

$$(I) \quad \text{\% by weight (M)AN} \leq 200 \cdot d - \frac{36}{1 + C_{ali}} - 168$$

and to the following relation (II):

$$(I) \quad \text{\% by weight (M)AN} \leq 183 \cdot d - \frac{45}{1 + C_{ali}} - 166$$

where (d) is the density of the plasticizer and ($C_{ali}$) is the (average) number of aliphatic carbon atoms in the molecule of the plasticizer.

2. Plastisols as claimed in claim 1, characterized in that the polymers are prepared by emulsion polymerization and have average particle diameters in the latex of 0.2 to 1.5 $\mu$m.

3. Plastisols as claimed in claim 2, characterized in that the polymer latices obtained by emulsion polymerization are dried by spray drying.

4. Plastisols as claimed in claim 3, characterized in that the secondary particle size is between 1 and 100 $\mu$m.

5. Plastisols as claimed in claims 1 to 4, characterized in that the polymers mentioned contain 1 to 90% by weight gel (as measured in tetrahydrofuran at 20°C).

6. A process for the production of the plastisols claimed in claim 1 by emulsion polymerization of the monomers, separation of the polymer from the aqueous phase and mixing with the plasticizer, optionally solvent and optionally other typical constituents, characterized in that polymers are produced by the seed inflow process.

7. The use of the plastisols claimed in claims 1 to 5 as coating and sealing compositions and adhesives.

**Revendications**

1. Plastisols consistant en 80 à 5 % en poids de plastifiant et 20 à 95 % en poids d'un polymère en particules contenant

a) 5 à 60 % en poids d'acrylonitrile et/ou de méthacrylonitrile,

b) au moins 15 % en poids de styrène et/ou d'α-méthylstyrène,

c) 0 à 10 % en poids d'un acide carboxylique copolymérisable avec les monomères a) et/ou b),

d) 0 à 30% en poids, et en l'absence du composant c), 10 à 30% en poids d'acrylates et/ou de méthacrylates d'alkyle,

les cas échéant un diluant et d'autres constituants usuels, les pourcentages en poids indiqués pour le plastifiant et le polymère se rapportant à la somme des poids du plastifiant et du polymère, caractérisés en ce que la teneur en (méth)acrylonitrile du polymère satisfait à la relation (I)

$$(I) \qquad \text{(M)AN, \% en poids} \leq 200 \cdot d - \frac{36}{1 + C_{ali}} - 168$$

et à la relation (II)

$$(II) \qquad (M)AN, \% \text{ en poids} \geq 183 \cdot d - \frac{45}{1 + C_{ali}} - 166$$

dans lesquelles d est la densité du plastifiant et $C_{ali}$ représente le nombre (moyen) d'atomes de carbone aliphatiques dans la molécule du plastifiant.

2.  Plastisols selon la revendication 1, caractérisés en ce que les polymères ont été préparés par polymérisation en émulsion et ont, dans le latex, un diamètre de particule moyen de 0,2 à 1,5 $\mu$m.

3.  Plastisols selon la revendication 2, caractérisés en ce que les latex de polymères obtenus par polymérisation en émulsion ont été séchés par atomisation.

4.  Plastisols selon la revendication 3, caractérisés en ce que la dimension de particule secondaire est comprise entre 1 et 100 $\mu$m.

5.  Plastisols selon les revendications 1 à 4, caractérisés en ce que les polymères en question contiennent de 1 à 90 % en poids de gel (mesure dans le tétrahydrofuranne à 20°C).

6.  Procédé pour préparer des plastisols selon la revendication 1, par polymérisation en émulsion des monomères, séparation du polymère et de la phase aqueuse et mélange du polymère avec le plastifiant, le cas échéant un solvant et le cas échéant d'autres constituants usuels, caractérisé en ce que l'on prépare les polymères par le mode opératoire d'ensemencement et alimentation.

7.  Utilisation des plastisols selon les revendications 1 à 5 en tant que matières de revêtement et d'étanchéité et colles.